Europäisches Patentamt

European Patent Office

Office européen des brevets

(19)

(11) Veröffentlichungsnummer: **0 546 421 B1**

(12) **EUROPÄISCHE PATENTSCHRIFT**

(45) Veröffentlichungstag der Patentschrift: **04.01.95**

(51) Int. Cl.6: **C09D 183/04**, C08J 3/20, C09D 7/14

(21) Anmeldenummer: **92120438.4**

(22) Anmeldetag: **30.11.92**

(54) **Fassadenanstrichmittel und Putze mit hoher Frühwasserbeständigkeit.**

(30) Priorität: **11.12.91 DE 4140733**

(43) Veröffentlichungstag der Anmeldung:
**16.06.93 Patentblatt 93/24**

(45) Bekanntmachung des Hinweises auf die
Patenterteilung:
**04.01.95 Patentblatt 95/01**

(84) Benannte Vertragsstaaten:
**AT CH DE DK ES FR GB IT LI**

(56) Entgegenhaltungen:
**EP-A- 0 287 085**
**CH-A- 618 462**

(73) Patentinhaber: **BAYER AG**

**D-51368 Leverkusen (DE)**

(72) Erfinder: **Kober, Hermann**
**Unterscheider Weg 34**
**W-5060 Bergisch Gladbach 2 (DE)**
Erfinder: **de Montigny, Armand, Dr.**
**Christian-Hess-Strasse 79**
**W-5090 Leverkusen 1 (DE)**
Erfinder: **Schlak, Ottfried, Dr.**
**Massliebchenweg 17**
**W-5000 Köln 80 (DE)**

**Beschreibung**

Die vorliegende Erfindung betrifft Fassadenanstrichmittel und Putze mit hoher Frühwasserbeständigkeit. Die erfindungsgemäßen Fassadenanstrichmittel und Putze gehören zu der Klasse, bei denen der Gehalt an organischen Harzen den Gehalt an Organopolysiloxanen nicht übersteigt (siehe z.B. DE-B 1 284 007).

Solche Fassadenanstrichmittel und Putze weisen im allgemeinen anorganische Feststoffgehalte von 45 -60 Gew.-%, Silikongehalte von 10 - 20 Gew.-%, eine organische Polymerdispersion in einer Menge von 2/5 bis 4/5 des Anteils an Silikonprodukt, sowie 20 bis 25 Gew.-Teile Wasser und untergeordneten Mengen an Dispergier-, Benetzungs- und Verdickungsmitteln auf.

Üblicherweise wird das Silikon in Form einer wässrigen Dispersion, die unter Verwendung von Emulgatoren hergestellt wurde, in die Mischung eingebracht, beziehungsweise vorgelegt, in die dann die anorganischen Bestandteile eindispergiert werden.

Solche Anstrichmittel und Putze weisen nach ihrer Applikation zunächst über eine gewisse Zeit ("Auswaschperiode") noch eine relativ hohe Wasseraufnahmefähigkeit auf, durch die die anfängliche Beständigkeit gegen Witterungseinflüsse (Regen) eingeschränkt ist.

Aufgabe der vorliegenden Erfindung ist es, Fassadenanstrichmittel und Putze der eingangs genannten Art zur Verfügung zu stellen, die frühwasserbeständig sind, das heißt die anfängliche Auswaschperiode nicht aufweisen.

Es wurde nun gefunden, daß die erfindungsgemäße Aufgabe gelöst wird, wenn die Fassadenanstrichmittel und Putze im wesentlichen emulgatorfrei hergestellt werden, Überraschenderweise gelingt dies, ohne Beeinträchtigung weiterer wesentlicher Anforderungen an solche Fassadenanstrichmittel und Putze, wie Weiterverdünnbarkeit mit Wasser, Langzeit-Lagerstabilität, usw.

Gegenstand der vorliegenden Erfindung ist daher ein Verfahren zur Herstellung von Anstrichmitteln und Putzen mit hoher Frühwasserfestigkeit, das dadurch gekennzeichnet ist, daß

a) zunächst die anorganischen Bestandteile in Gegenwart von Pigmentbenetzungshilfen in mindestens 80 % des insgesamt eingesetzten Wassers dispergiert werden,

b) danach, in die gemäß a) erhaltene Dispersion Silikonharze ohne Zusatz von Emulgatoren dispergiert werden, wobei die Silikonharze zur Einstellung der Viskosität mit höchstens geringen Mengen an organischen Lösungsmitteln verdünnt sein können, und

c) schließlich das organische Polymer in Form einer wässrigen Dispersion zugemischt wird.

Gegenstand der vorliegenden Erfindung sind auch emulgatorfreie Anstrichmittel und Putze mit einem Gehalt von 5 - 50 Gew.-% an Silikonharzen.

Geeignete Pigmentbenetzungsmittel im Sinne der vorliegenden Erfindung sind Natriumpolyphosphat oder Hexamethaphosphat, die vorzugsweise in wässriger Lösung eingesetzt werden, beziehungsweise oberflächenaktive Mittel mit starker Affinität zu den Feststoffoberflächen der anorganischen Teilchen, wie Salze der Polyacrylsäure PVA oder Schutzkolloide auf Cellulosebasis. Einsatz in geringer Menge (der Pigmentbenetzungshilfen) bedeutet, daß diese höchstens in einer solchen Menge eingesetzt werden sollen, daß sie vollständig von der Feststoffoberfläche der anorganischen Teilchen absorbiert werden und das Dispergiermittel (Wasser) nach Dispergierung der anorganischen Teilchen im wesentlichen keine freien Moleküle an Pigmentbenetzungshilfe mehr enthält.

Als anorganische Bestandteile werden erfindungsgemäß die üblichen anorganischen Bestandteile von Anstrichmitteln und Putzen eingesetzt, wie z.B. Talkum, Kalciumcarbonat, anorganische Farbpigmente, wie Titandioxid, Eisenoxide usw.

Vorzugsweise werden die Pigmentbenetzungshilfen im Wasser vorgelegt und hierin die anorganischen Bestandteile dispergiert. Die Pigmentbenetzungshilfe wird vorzugsweise in Mengen von unter 1 Gew.-%, besonders bevorzugt 0,4 -0,8 Gew.-% bezogen auf das Wasser eingesetzt.

Als Silikone werden erfindungsgemäß Organopolysiloxane beziehungsweise Silikonharze, die gegebenenfalls nach Zugabe geringer Menge Lösungsmittel eine Viskosität von 2 bis 10.000 mPa.s, vorzugsweise von 20 bis 5.000 mPa.s besitzen und eine Zusammensetzung der allgemeinen Struktur

$$R_x Si(G)_y (O)_{\frac{4-x-y}{2}}$$

aufweisen, wobei
R ein aliphatischer, aromatischer, gesättigter oder ungesättigter, gegebenenfalls halogen- oder cyansubstituierter einwertiger Kohlenwasserstoffrest mit bis zu 18 C-Atomen ist, wobei vorzugsweise mindestens 80 % Methylreste vorliegen,

und wobei

G ein Wasserstoffatom, eine OH-Gruppe und/oder einen hydrolysierbaren Rest darstellt, mit der Maßgabe, daß der hydrolytisch abgespaltene Rest, das Eigenschaftsbild des Fassadenanstrichmittels oder Putzes nicht nachhaltig stört, und wobei

x einen Wert $0{,}75 \leq x \leq 2$

y einen Wert $0 \leq y \leq 2$

besitzt.

Beispiele erlaubter hydrolytisch abspaltbarer Produkte sind Alkohole, Amine, niedermolekulare Carbonsäure, Oxime usw. Als hydrolytisch abspaltbare Gruppen sind Alkohole bevorzugt.

Erfindungsgemäß können ebenfalls höherviskose Silikonharze eingesetzt werden, wenn diese durch Vermischen mit geringen Mengen Lösungsmitteln wie Isoparaffin, Solventnaphtha (z.B. Shellsol A) in ihrer Viskosität angepaßt werden.

Erfindungsgemäß wesentlich ist, daß die Silikone emulgatorfrei, insbesondere nicht in Wasser vordispergiert, zu der die anorganischen Bestandteile bereits enthaltenden Dispersionen gegeben werden. Die Eindispergierung erfolgt in üblicherweise mittels schnell laufender Rührwerke.

Als wässrige Dispersion eines organischen Polymeren werden üblicherweise dem Stand der Technik entsprechende Bindemitteldispersionen, z.B. aus Styrol und Acrylsäureester, zugemischt.

Schließlich kann gegebenenfalls noch zur Einstellung der Reologie eine geringe Menge eines Verdikkungsmittels, z.B. 1,5 - 3 % bezogen auf die Gesamtdispersion einer z.B. 2,5 %igen Lösung von Celluloseether-Derivaten, z.B. Hydroxyethylcellulose,in Wasser eingesetzt werden.

Die Erfindung wird anhand der nachfolgenden Beispiele näher erläutert.

Beispiele

A. Herstellung

Die Herstellung von Dispersionsfarben wird mit einem Dissolver ausgeführt. Dabei wird die in der Rezeptur vorgesehene Menge Wasser im Mischbehälter vorgelegt. Es werden die Pigmentbenetzungshilfsmittel zugefügt. Danach werden die Füllstoffe und Pigmente zugegeben und ca. 5 Minuten vordispergiert.

Nachdem die Pigment- und Füllstoffagglomerate zerschlagen sind, wird nun erfindungsgemäß das Silikon untergerührt und weitere 5 Minuten mit der gesamten Mischung dispergiert. Als letzter Schritt wird eine Polymerdispersion zugesetzt und 1 Minute bis zur homogenen Verteilung untergerührt.

Die auf diese Weise gefertigte Silikondispersionsfarbe wird, falls erforderlich, mit den in der Praxis üblichen Verdickungsmitteln wie Celluloseether-Derivate, Hydroxyethylcellulose usw. auf Verarbeitungskonsistenz nachträglich eingestellt.

Der Fertigungsvorgang für Dispersionsputze ist vergleichbar. Auch dabei wird das Organopolysiloxan zu den vordispergierten Füllstoffen und Pigmenten gegeben. Der Zuschlag an gröberem Quarzsand erfolgt aber erst, nachdem der Dispergierprozeß abgeschlossen ist.

B. Rezepturen

In den folgenden Beispielen werden folgende Zusammensetzungen eingesetzt:

Rezeptur I:

210,7 Gew.-Teile Wasser

8,4 Gew.-Teile Natriumpolyphosphat-Lösung (10%ig in $H_2O$)

1,4 Gew.-Teile Pigmentbenetzungshilfe (auf Basis Polyacrylsäure)

70,2 Gew.-Teile Talkum (Teilchengröße 20 $\mu$m)

70,2 Gew.-Teile Gefälltes Calciumcarbonat (mittlere Teilchengröße 0,3 $\mu$m)

140,4 Gew.-Teile Calciumcarbonat (Füllstoff Calcit-Type, mittlere Teilchengröße 5 $\mu$m)

140,4 Gew.-Teile Calciumcarbonat (Füllstoff Calcit-Type, mittlere Teilchengröße 15 $\mu$m)

140,4 Gew.-Teile Titandioxid, Rutiltype

140,4 Gew.-Teile Erfindungsgemäßes Siliconprodukt

56,2 Gew.-Teile Dispersion aus Styrol und Acrylsäureester, 50%ig in $H_2O$ (Polymerdisper sion)

21,3 Gew.-Teile Verdickungsmittel (Hydroxyethylcellulose 2,5%ige Lösung in $H_2O$)

1000 Gew.-Teile

Rezeptur II

203,4 Gew.-Teile Wasser
6,4 Gew.-Teile Natriumpolyphosphatlösung (10%ig in $H_2O$)
1,1 Gew.-Teile Pigmentbenetzungshilfe (s. sub. I)
105,9 Gew.-Teile Talkum (s. sub. I)
105,9 Gew.-Teile Calciumcarbonat gefällt (s. sub. I)
264,8 Gew.-Teile Calciumcarbonat, Calcit-Type (5 bis 15 $\mu$m)
105,9 Gew.-Teile Titandioxid, Rutil-Type
105,9 Gew.-Teile Erfindungsgemäßes Siliconprodukt
84,8 Gew.-Teile Dispersion aus Styrol/Acrylsäureester (s. sub. I)
15,9 Gew.-Teile Verdickungsmittel (s. sub. I)
1000 Gew.-Teile

C. Prüfung

Nach obigem Verfahren und obigen Rezepturen hergestellte Fassadenfarben werden auf ihre Wasseraufnahme untersucht. Dabei wird die Saugwirkung eines Baustoffes beziehungsweise die des Verbundsystems Baustoff/Beschichtung gemessen.

Die Messung der kapillaren Wasseraufnahme ist in der DIN 52 617 beschrieben. Das hier angewendete Verfahren wird als Kurztest in Anlehnung an obige Vorschrift ausgeführt.

Als Anstrichträger dienen Kalksandstein-Scheiben (115 x 70 x 20 mm mit einer Oberfläche von 0,008 $m^2$).

Bei der Beschichtung der Anstrichträger werden als erster Anstrich 6,5 g auf die Oberfläche gegossen und mit einem Flachpinsel gleichmäßig verteilt, wobei die Seitenflächen ebenfalls beschichtet werden.

Im Abstand von 24 Stunden erfolgt der zweite Anstrich. Die aufgetragene Menge Farbe beträgt 4,5 g.

Die beschichteten Probekörper werden 24 Stunden bei Raumtemperatur und anschließend 24 Stunden bei 50°C gelagert. Zur weiteren Konditionierung erfolgt eine zusätzliche 24-stündige Lagerung bei Raumtemperatur.

Die so vorbereiteten Probekörper werden in Schalen, die mit Schaumstoff ausgelegt und mit Wasser gefüllt sind so eingebracht, daß die gestrichene Oberfläche ständig mit der mit Wasser gesättigten Schaumstoffoberfläche in Kontakt bleibt.

Die Gewichtszunahme wird - in Abhängigkeit von der Zeit (nach 2, 6 und 24 Stunden) - gemessen und mit derjenigen des unbehandelten Probekörpers verglichen.

Beispiel 1 (Referenzbeispiel

Ein unbehandelter Probekörper wird gemäß der beschriebenen Prüfmethode einer Wasserlagerung unterzogen.

| Dauer der Lagerung | Wasseraufnahme [$kg/m^2$] |
|---|---|
| 2 | 2,98 |
| 6 | 3,01 |
| 24 | 3,1 |

Beispiel 2 (Vergleichsbeispiel)

Eine Farbe gemäß Rezeptur I wird hergestellt, indem in dem Wasser zunächst ein Silikonharz der mittleren Zusammensetzung $(CH_3)_{1,2} Si(O)_{1,38} (OH)_{0,04}$, dessen Viskosität durch Zugabe von 45 Gew.-Teilen Solventnaphtha auf 2050 mPa.s (23°C) eingestellt war, unter Verwendung von 8,4 Gew.-Teilen eines Polyethylenoxid-alkylamins als Emulgator dispergiert wird. Anschließend werden die anorganischen Bestandteile, usw. dispergiert.

| Dauer der Lagerung | Wasseraufnahme [kg/m$^2$] |
|---|---|
| 2 | 0,40 |
| 6 | 2,90 |
| 24 | 3,10 |

Diese Probe wurde anschließend neu eingelagert. Bei dieser zweiten Lagerung wurden dann nachstehende Werte erzielt:

| Dauer der Lagerung | Wasseraufnahme [kg/m$^2$] |
|---|---|
| 2 | 0,10 |
| 8 | 0,25 |
| 24 | 0,50 |

Beispiel 3

Ein Probekörper, der mit einer Fassadenfarbe - die nach Rezeptur I unter Einsatzes eines Silikonproduktes einer Viskosität von 114,5 mPa.s und der durchschnittlichen Zusammensetzung

$$[CH_3SiO_{3/2}]_{30} \ [(CH_3)_2SiO]_{400} \ [C_2H_5O_{1/2}]_{32}$$

erfindungsgemäß hergestellt wurde - beschichtet war, zeigte bei der Wasserlagerung nachstehende Ergebnisse:

| Dauer der Lagerung (Std) | Wasseraufnahme [kg/m$^2$] |
|---|---|
| 2 | 0,11 |
| 6 | 0,21 |
| 24 | 0,34 |

Beispiel 4

Eine nach Rezeptur I unter Einsatz eines Silikonproduktes einer Viskosität von 90 mPa.s der durchschnittlichen Zusammensetzung

$$(CH_3)_{0,8}(C_{12}H_{25})_{0,2}Si(O)_1(OCH_3)_1,$$

das mit 1 % Hexamethyldisilazan stabilisiert war, erfindungsgemäß hergestellte Farbe, zeigt auf den beschriebenen Probekörpern folgende Wirkung:

| Dauer der Lagerung (Std) | Wasseraufnahme [kg/m$^2$] |
|---|---|
| 2 | 0,12 |
| 6 | 0,28 |
| 24 | 0,86 |

Beispiel 5

Nach Rezeptur I wurde eine Farbe formuliert in der das Verhältnis von Organopolysiloxan (aus Beispiel 3) zu Polymerbindemittel von 83,3 : 16,7 Gew.-% auf 73 : 27 Gew.-% abgeändert wurde. Die Prüfung ergab folgende Werte:

| Dauer der Lagerung (Std) | Wasseraufnahme [kg/m$^2$] |
|---|---|
| 2 | 0,23 |
| 8 | 0,41 |
| 24 | 0,60 |

Viskosität der Farbe vor Verarbeitung:

| sofort | 1300 mPas |
|---|---|
| n. 2 Wochen | 1300 mPas |
| n. 8 Wochen | 1450 mPas |

Beispiel 6

Auf der Rezeptur II basierende Farben A, B und C, die jeweils als Siliconkomponente die erfindungsgemäßen Produkte

a: $[CH_3SiO_{3/2}]_{50}$ $[(CH_3)_2SiO]_{1000}$ $[C_2H_5O_{1/2}]_{52}$
(Viskosität: 176,8 mPa.s)
b: $[CH_3SiO_{3/2}]_{30}$ $[(CH_3)_2SiO]_{400}$ $[C_2H_5O_{1/2}]_{32}$
(Viskosität: 114,5 mPa.s)
c: $[CH_3SiO_{3/2}]_{30}$ $[(CH_3)_2SiO]_{200}$ $[C_2H_5O_{1/2}]_{32}$
(Viskosität: 32,1 mPa.s)

enthalten, zeigten sich auf den Prüfkörpern folgende Ergebnisse:

| Dauer der Lagerung [Std] | Wasseraufnahme [kg/m$^2$] | | |
|---|---|---|---|
| | A | B | C |
| 2 | 0,11 | 0,12 | 0,14 |
| 6 | 0,22 | 0,22 | 0,24 |
| 24 | 0,34 | 0,33 | 0,36 |

| Lagerdauer [Wochen] der unverarbeiteten Farbe T: ca. 25°C | - Viskosität [mPas] - | | |
|---|---|---|---|
| | A | B | C |
| 0 | 1800 | 1200 | 1000 |
| 7 | 1800 | 1250 | 1050 |

Beispiel 7

Eine auf Rezeptur II basierende Farbe, die als Silikonkomponente eine 80%ige Lösung eines Harzes der mittleren Zusammensetzung

$(CH_3)_{1/2}Si(O)_{1,38}(OH)_{0,04}$

in Shellsol A enthielt, zeigte folgende Werte nach der Wasserlagerung:

| Dauer der Lagerung [Std] | Wasseraufnahme [kg/m$^2$] |
|---|---|
| 1 | 0,04 |
| 8 | 0,13 |
| 24 | 0,46 |

## Patentansprüche

1. Verfahren zur Herstellung von Anstrichmittel und Putzen mit hoher Frühwasserfestigkeit, dadurch gekennzeichnet, daß

   a) zunächst die anorganischen Bestandteile in Gegenwart geringer Mengen Pigmentbenetzungshilfen in mindestens 80 % des insgesamt eingesetzten Wassers dispergiert werden,

   b) danach in der nach a) erhaltenen Dispersion Silikone ohne Zusatz von Emulgatoren dispergiert werden, und

   c) schließlich eine wässsrige Dispersion eines organischen Polymeren zugemischt wird.

2. Emulgatorfreie Anstrichmittel und Putze mit einem Gehalt von 5 - 50 Gew.-% an Silikon.

## Claims

1. Process for the production of paints and renders with elevated initial water resistance, characterised in that

   a) the inorganic constituents are first dispersed, in the presence of small quantities of pigment wetting auxiliaries, in at least 80% of the total quantity of water used,

   b) silicones are then dispersed without the addition of emulsifiers into the dispersion obtained in a), and

   c) finally, an aqueous dispersion of an organic polymer is mixed in.

2. Emulsifier-free paints and renders containing 5-50 wt.% silicone.

## Revendications

1. Procédé de préparation de produits de revêtement et enduits à haute résistance précoce à l'eau, caractérisé en ce que

   a) on disperse d'abord les constituants minéraux en présence de petites quantités de produits auxiliaires de mouillage des pigments dans 80% au moins de la quantité d'eau totale mise en oeuvre,

   b) dans la dispersion obtenue en a), on disperse ensuite les silicones sans adjonction d'agents émulsionnants et

   c) finalement, on ajoute et on mélange une dispersion aqueuse d'un polymère organique.

2. Produits de revêtement et enduits sans agent émulsionnant, à une teneur en silicone de 5 à 50% en poids.